# EUROPEAN PATENT SPECIFICATION

(11) **EP 1 524 595 B1**
(45) Date of publication and mention of the grant of the patent: **08.12.2010**
(21) Application number: 04024294.3
(22) Date of filing: 12.10.2004
(51) Int. Cl.: G06F 9/445

(54) **Removable media device, host device, program and recording medium thereof**
Gerät zur Verwendung von Wechseldatenträgern, Hostcomputer, Programm und Datenträger für ein solches Gerät.
Appareil de réception de support d'information amovible, ordinateur central, programme et support d'information pour un tel appareil.

(30) Priority: 16.10.2003 JP 2003356414
(43) Date of publication of application: 20.04.2005
(73) Proprietor: I-O Data Device, Inc., Kanazawa-shi Ishikawa 920-8512 (JP)
(72) Inventor: Hosono, Akio, Kanazawa-shi Ishikawa 920-8512 (JP); Hongo, Michitoshi, Kanazawa-shi Ishikawa 920-8512 (JP); Fujita, Takeshi, Kanazawa-shi Ishikawa 920-8512 (JP)
(74) Representative: Strehl Schübel-Hopf & Partner

(56) References cited:
- EP-A- 0 844 554
- US-A- 6 055 595
- US-B1- 6 366 966
- US-B1- 6 405 362

## Description

### BACKGROUND OF THE INVENTION

### 1. FIELD OF THE INVENTION

The present invention relates to a removable media device, a host device, and a program and a recording medium thereof, wherein the removable media device loads a medium such as a DVD + RW (Digital Versatile Disk + Rewritable), DVD-RW, DVD-RAM (DVD-Random Access Memory), MO (Magnet Optical Disk), CD-RW (Compact Disk Rewritable), and USB (Universal Serial Bus) Connection Flash Memory and is used with being connected to the host device such as a PC (Personal Computer).

### 2. DESCRIPTION OF THE RELATED ART

In order to operate an application program (hereinafter referred to as 'AP') of a host device such as a PC, minimum knowledge relating to the PC is needed even for a very simple operation and a difficulty accompanies a beginner. For example, when activating a specific AP, it is necessary to select one AP out of a plurality of APs by an operation of a mouse and the like, and it also becomes necessary to set an operation environment by using a keyboard.

Therefore, a technology is developed and proposed for automatically running a related AP without a user's intervention by using the insertion of a medium as a trigger. To be more precise, the removable medium includes a task disk control file, and it accommodates all configuration information necessary for running the related AP from the removable medium and, on insertion of the medium, can automatically run the AP, based on the configuration information (for example, see paragraphs 0010 to 0012 and FIG. 1 in Japanese Patent Laid-Open Publication No. 2001-75813(hereinafter referred to as patent document 1)).

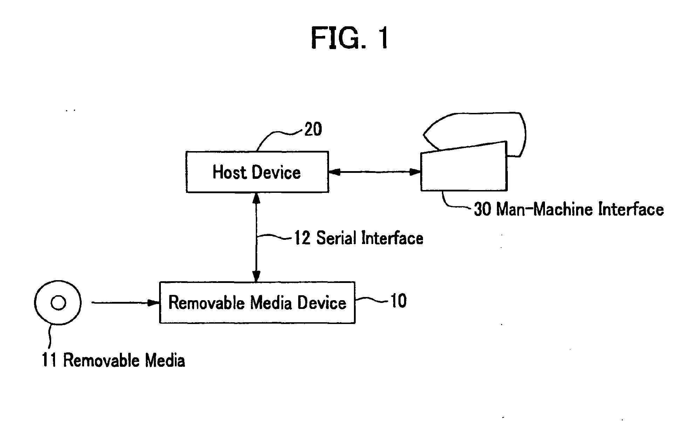

In addition, it is also proposed an IC (Integrated Circuit) card that improves user's usability by activating an AP with the IC card when realizing an 'Autorun' function of 'Windows' (registered trademark) in cooperation with the IC card and recognizing a connection of the IC card (see paragraphs 0008 to 0023 and FIG. 1 in Japanese Patent Laid-Open Publication No. 2001-166927 (hereinafter referred to as patent document 2).

However, in accordance with the technology disclosed in the patent document 1, although a user's intervention can be made unnecessary, it is necessary for an OS (Operating System) of a host device to always monitor a medium, and therefore, a burden of the OS becomes large and a response becomes lowered. In addition, because a specific area is frequently accessed, the technology has a fault that nothing but the area is severely worn.

In addition, in accordance with the technology disclosed in the patent document 2, the function of the IC card becomes limited and does not configure a computer so as to activate an AP, based on a command included in the medium, in addition, the above IC card system does not have a function of controlling termination of the AP activated from the medium and saving a data file in the medium. Furthermore, there is a fault that a usable OS is limited.

On the other hand, although it has appeared a product wherein a software for a backup is activated by pushing a physical button provided on a hard disk device, it becomes a factor of a cost increase and is not preferable.

In addition, for example, in such a case of using an AP for a plurality of PCs at an office and a house, there is also a need for bringing around the AP itself in a state of set information thereof being included.

US-A-6,055,595 discloses an apparatus and a method for automatically starting and terminating an application program in a system comprising a computer connectable to a PC-card. Information indicating correspondences between names of Modem, Ethernet or Floppy controller cards on the one hand and file names of application programs on the other hand are registered in the registry of the computer's operating system, thereby enabling an automatic association of an inserted card with a corresponding application program stored on the computer.

### SUMMARY OF THE INVENTION

It is an object of the present invention to provide a technology which reduces the burden on a user handling removable media, especially for backup purposes. This object is solved by the invention as defined in the appended claims.

Embodiments of the invention make a user's intervention in the activation of an application program unnecessary, reduce the workload of an operating system, and do so without accessing a specific area of a removable medium more than necessary.

### BRIEF DESCRIPTION OF THE DRAWINGS

FIG. 1 is a drawing showing a connection configuration of a removable media device and a host device thereof related to an embodiment of the present invention.
FIG. 2 is a block diagram of a removable media device related to an embodiment of the present invention.
FIG. 3 is a block diagram showing a configuration of a host device related to an embodiment of the present invention.
FIG. 4 is a drawing showing one example of a data structure of a removable media related to an embodiment of the present invention.
FIG. 5 is a flowchart showing an operation of a removable media device related to an embodiment of the present invention.
FIG. 6 is a flowchart showing processing of a program (monitoring utility) related to an embodiment of the present invention.
FIG. 7 is a flowchart showing processing of a program (format utility) related to an embodiment of the present invention.
FIG. 8 is an operation sequence diagram showing an operation of an application example related to an embodiment of the present invention.

### DESCRIPTION OF THE PREFERRED EMBODIMENTS

Here will be described an embodiment of the present invention in detail, referring to drawings.

### [Device Configuration]

FIG. 1 is a drawing showing a connection configuration of a removable media device and a host device thereof related to an embodiment of the present invention.

In FIG. 1 a symbol 10 is the removable media device, and thereon is loaded a removable media 11 such as a DVD + RW, a CD-RW, and a USB flash. In addition, a symbol 20 is the host device such as a PC, and the host device is connected to the removable media device through a serial interface 12 such as a USB and an IEEE1394. A symbol 30 is a man-machine device such as a keyboard and a display and is operated by a user when defining such an AP (Application Program) run content described later.

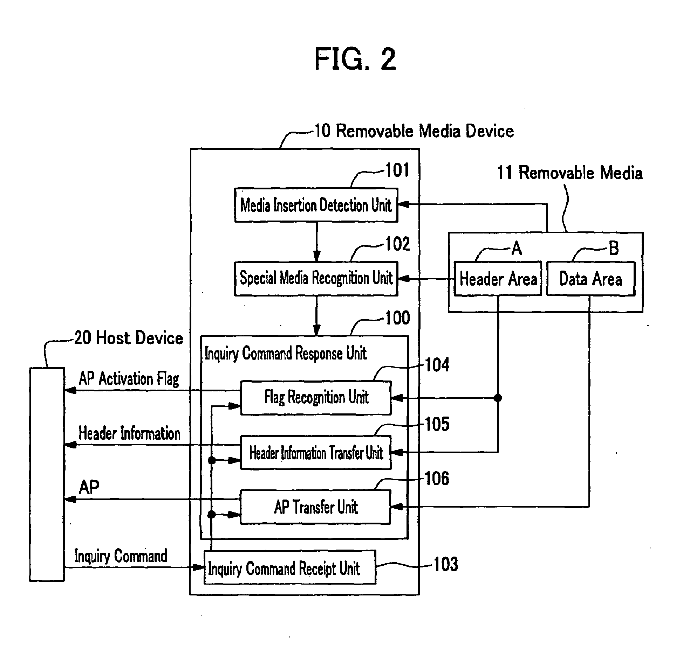

FIG. 2 is a block diagram of a removable media device related to the embodiment of the present invention. The removable media device 10 comprises a media insertion detection unit 101, a special media recognition unit 102, an inquiry command receipt unit 103, and an inquiry command response unit 100.

The media insertion detection unit 101 is a sensor for detecting an insertion of the removable media 11 in the removable media device 10 and an output thereof is supplied to the special media recognition unit 102. When the insertion of the removable media 11 is detected by the media insertion detection unit 101, the unit 102 has a function of referring to a specific area (header area A) of the inserted media and recognizing it as a special media for activating an AP, and an output thereof is supplied to the inquiry command response unit 100.

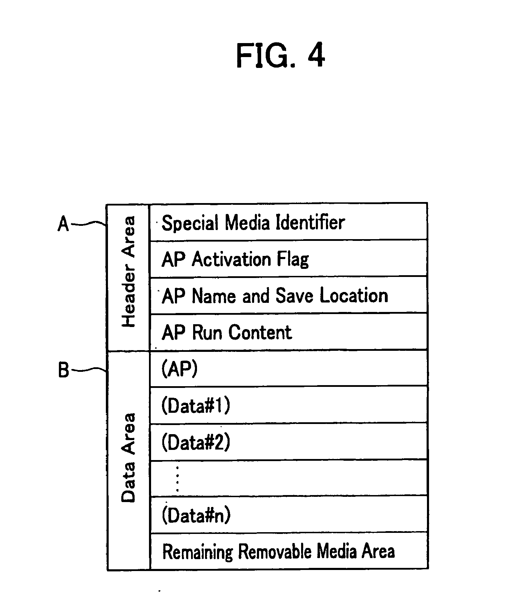

In FIG. 4 is shown one example of a data structure of the removable media 11.

As shown in FIG. 4, areas in the removable media 11 are largely classified into the header area A and a data area B. At the header area A are recorded an identifier of the special media, an AP activation flag (ON/OFF), an AP name, an AP save location, and the AP run content. In addition, at the data area B are recorded the AP, data #1 to #n handled by the AP, and the like.

Returning to the description of FIG. 2, the inquiry command receipt unit 103 receives an inquiry command periodically issued from the host device 20 connected to outside, and an output thereof is supplied to one input terminals of a flag recognition unit 104, a header information transfer unit 105, and an AP transfer unit 106 that configure the inquiry command response unit 100.

The inquiry command response unit 100 has a function of transferring data relating to the AP activation flag, which indicates whether or not to activate the AP, and the save location of the AP and transferring the AP as needed. The flag recognition unit 104 transfers the activation flag, the header information transfer unit 105 transfers the data relating to the save location of the AP, and the AP transfer unit 106 transfers the AP.

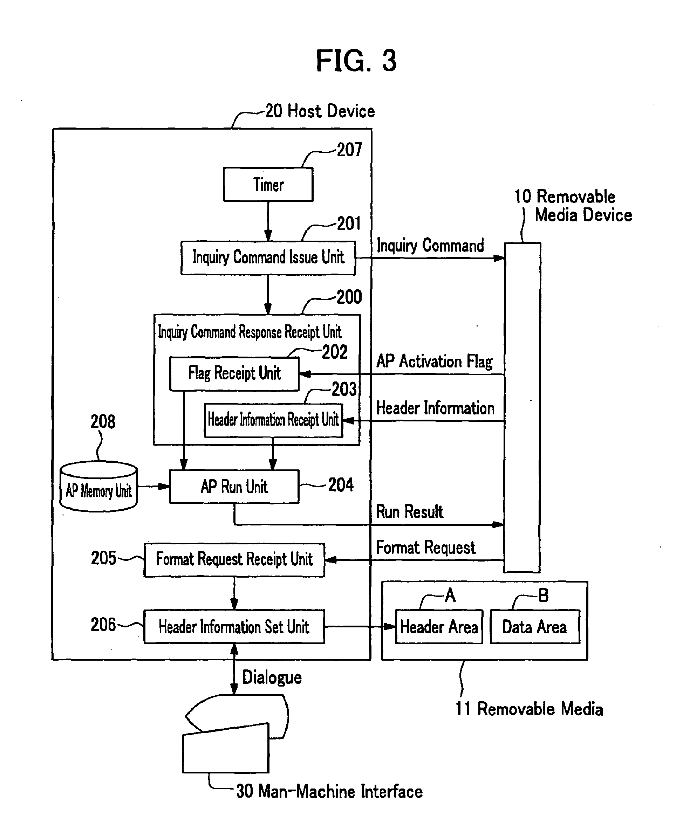

FIG. 3 is a block diagram showing a configuration of a host device related to the embodiment of the present invention. The host device 20 consists of, for example, a PC and comprises an inquiry command issue unit 201, an inquiry command response receipt unit 200, an AP run unit 204, a format request receipt unit 205, a header information set unit 206, a timer 207, and an AP memory unit 208.

The inquiry command issue unit 201 has a function of making it a trigger a signal produced for the removable media device 10 at a predetermined time interval by the timer 207 and issuing the inquiry command. The inquiry command response receipt unit 200 has a function of receiving the AP activation flag, which indicates to use the removable media 11 inserted in the removable media device 10 as an AP activation special media, and the header information, which indicates the save location of the AP, as a response for the inquiry command; and an output thereof is supplied to the AP run unit 204. The AP activation flag and the header information for indicating the save location are respectively supplied to a flag receipt unit 202 and a header information receipt unit 203 that configure the inquiry command response receipt unit 200.

In addition, the AP run unit 204 has a function of reading the AP stored at the save location set at the header area A of the special media and running the AP according to the AP run content set at the header area A. In addition, the unit 204 also writes an run result of the AP at a predetermined area, depending on the AP run content set at the header area A if any.

Furthermore, the AP run unit 204 also has a function of stopping the AP in run when receiving an eject notice of the removable media 11 from the removable media device 10 while running the AP.

On the other hand, the format request receipt unit 205 receives from outside a format request for using the removable media 11 as the AP activation special media and supplies the received format request to the header information set unit 206.

According to the format request received by the format request receipt unit 205, the header information set unit 206 interactively produces with a user through the man-machine device 30: the special media identifier for indicating that the removable media 11 is the AP activation special media; the AP activation flag for indicating whether or not to activate the AP, accompanying the insertion of the removable media 11; the AP name and AP save location of an activation object; and the AP run content (detailed operation content such as a data input and a save of a run result) for running the AP, and then writes them in the header area A of the removable media 11.

The timer 207 is a clock function which the host device 20 has and, particularly, that outputs a signal produced at a predetermined time interval to the inquiry command issue unit 201. The AP memory unit 208 is a memory measure which the host device 20 has and, particularly, that memorizes the AP run by the AP run unit 204. The AP memory unit 208 is realized by a hard disk device, a flash memory, and the like.

### [Device Operation]

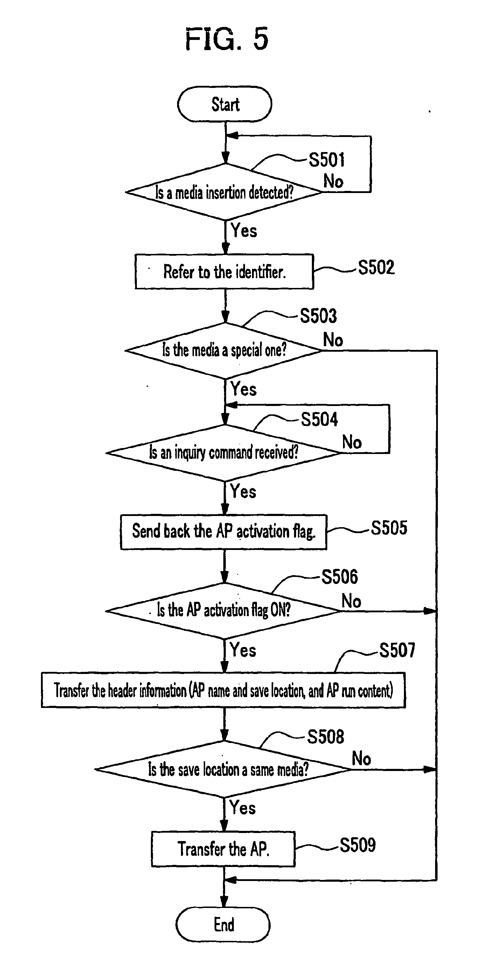

FIG. 5 is a flowchart showing an operation of a removable media device related to the embodiment of the present invention. In addition, processing of a media control program is shown in parallel. Meanwhile, the media control program is assumed to be registered as a firmware in advance in an EEPROM (Electrically Erasable and Programmable Read Only Memory, not shown) housed in the removable media device 10.

Here will be described an operation of the removable media device 10, referring to FIG. 5 (see FIG. 2 as needed).

In the removable media device 10, firstly the media insertion detection unit 101 detects that the removable media 11 has been inserted (Yes in S501) and activates the special media recognition unit 102. The recognition unit 102 refers to an identifier of the header area A of the inserted removable media 11 (S502) and recognizes it as the special media for activating the AP (Yes in S503). Here is assumed that a predetermined mark is written as the identifier. After the inserted removable media 11 is recognized as the special media, the inquiry command receipt unit 103 is assumed to receive an inquiry command from the host device 20 (Yes in S504). Meanwhile, the inquiry command is a command for inquiring whether or not the AP activation flag of the removable media 11 is ON.

And the flag recognition unit 104 of the inquiry command response unit 100 refers to the header area A and returns the AP activation flag to the host device 20 (S505). Subsequently, checking that the AP activation flag has been set (Yes in S506), the flag recognition unit 104 activates the header information transfer unit 105 and transfers the AP name, the AP save location and the AP run content set at the header area A to the host device 20 (S507).

Furthermore, if the AP save location exists within the same removable media 11 (Yes in S508), the flag recognition unit 104 transfers the AP to the host device 20 (S509). The above thus described is the operation of the firmware housed within the removable media device 10.

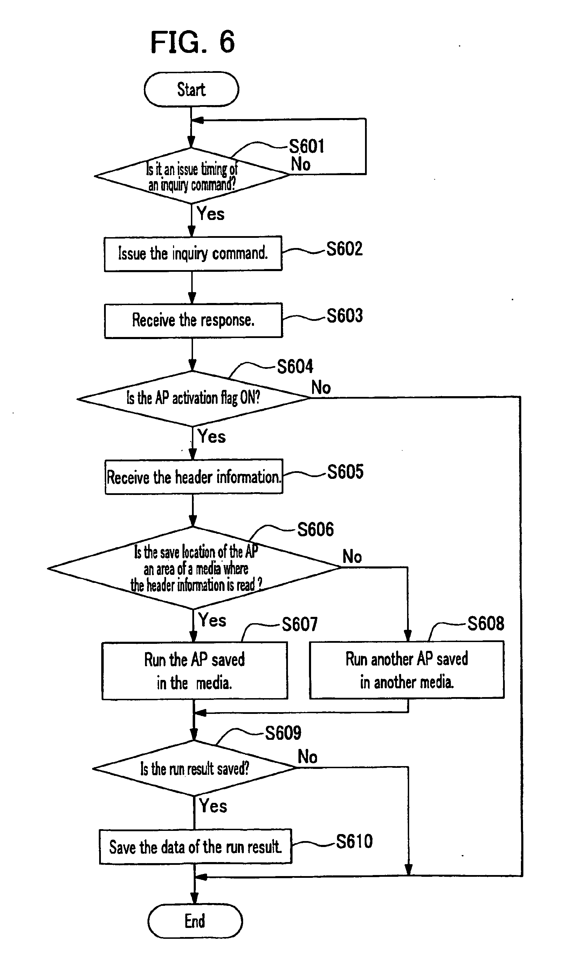

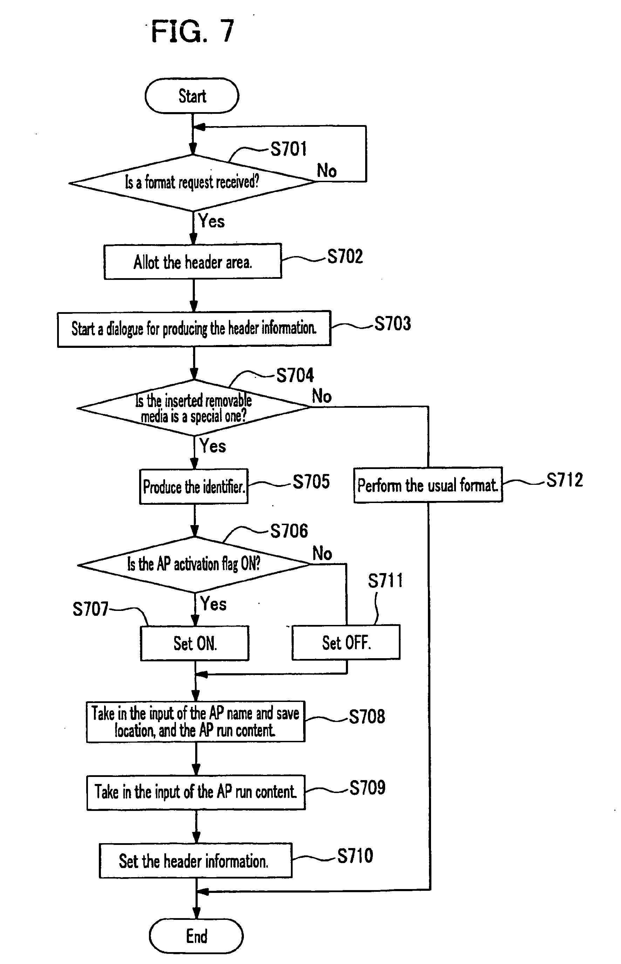

FIGS. 6 and 7 are flowcharts showing an operation of a host device related to an embodiment of the present invention. In addition, FIGS. 6 and 7 respectively show processing of a monitoring utility and a format utility prepared as a program related to an embodiment of the present invention.

The operation of the monitoring utility will be described according to FIG. 6 (see FIG. 3 as needed). In the host device 20, when it becomes a timing of a predetermined time interval measured by the timer 207 for the removable media device 10 (Yes in S601), the inquiry command issue unit 201 issues an inquiry command (S602). The removable media device 10 receiving the inquiry command sends a content of the header area A, referring to the header area A. The flag receipt unit 202 of the inquiry command response receipt unit 200 receives the AP activation flag (S603). If the AP activation flag is set ON (Yes in S604), the header information receipt unit 203 receives the AP name, the AP save location, and the AP run content as header information (S605).

Here, if the save location of the AP is an area of an media where the header information is read (Yes in S606), the AP run unit 204 reads the AP saved in the removable media 11 and runs it (S607). If saved in another storage media such as the AP memory unit 208 of the host device 20 (No in S606), the AP run unit 204 reads the AP from the storage media and runs it (S608). Thus, because the AP activation is automated, and additionally, the detailed operation content including an input and the like according to the set 'AP run content' is handed over to the AP, the operation of a mouse and a keyboard usually performed becomes unnecessary.

Meanwhile, in running the AP, if a result save instruction is made as an 'AP run content' transferred from the header area A (Yes in S609), the AP run unit 204 saves a run result of the AP at a predetermined location according to the instruction (S610).

In addition, although not shown in the flowchart of FIG. 6, when the removable media 11 is ejected from the removable media device 10 in running the AP and the AP run unit 204 receives the ejection notice as described later, the AP run unit 204 protects a data destruction due to a mistake of a media insertion and the like by stopping the AP in run. A detail will be described later.

Next, according to FIG. 7 will be described an operation of the format utility (see FIG. 3 as needed).

Firstly, in the host device 20 the format request receipt unit 205 receives a format request of the removable media 11 (Yes in S701). Thus the header information set unit 206 is activated, and firstly, the header area A is allotted within the removable media 11 (S702). And a data input/output is started through a dialogue for producing header information between a user and the set unit 206, using the man-machine device 30 (S703).

In other words, the header information set unit 206 produces a screen and a message for prompting the user to input the special media identifier, the AP activation flag, the AP name, the AP save location, and the AP run content. Furthermore, the header information set unit 206 takes in the data input by the user who sees the screen and the message, and sets the taken-in data at the header area A in a predetermined format.

To be more precise, when formatting the removable media 11 inserted in the removable media device 10 as the special media (Yes in S704), the header information set unit 206 produces identifier data (predetermined mark) (S705), and additionally, produces data for setting ON/OFF of the AP activation flag, depending on an user's input (S706, S707, and S711). And the header information set unit 206 takes in the user's input with respect to the AP name and the AP save location (S708) and then the AP run content (S709), and sets the content of the taken-in user's input at the header area A (S710).

Meanwhile, if in S704 the removable media 11 is not the special media (No in S704), the header information set unit 206 is assumed to run a usual format (S712).

Only after the format processing thus described is run, the automatic run of the AP is enabled by the special media.

### [Operation of Application Example]

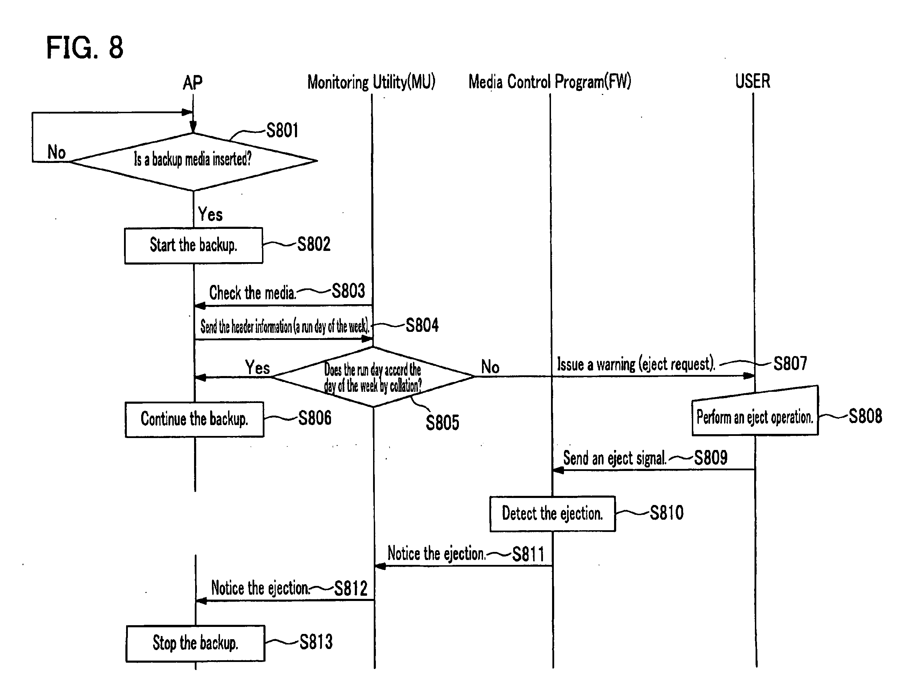

FIG. 8 is an operation sequence diagram showing an operation of an application example related to an embodiment of the present invention, and to be more precise, shows the operation sequence diagram when a user ejects a special media and cancels an operation according to an AP.

Here is shown a flow of an operation between the AP, a monitoring utility (MU), a media control program (FW: firmware), and a USER, and is exemplified a case of preventing a data destruction by making an AP run content have a scheduler function. The USER corresponds to an input/output device.

In other words, the AP automatically activated is made a backup program and seven pieces of automatic activation media of the backup program are prepared, corresponding to each day of the week.

Firstly, if a media where a backup content is written is inserted as an operation once per day (Yes in S801), the backup starts (S802). At this time the monitoring utility checks the media (S803). Here header information set at the header area A is taken in (S804). At the header area A is set data of a day of the week to be run.

A collation of the day of the week is run by the monitoring utility (S805), and if the inserted media is a backup media matching the day (Yes in S805), backup processing according to the AP is continued (S806). On the other hand, if the inserted media is a backup media inserted by a mistake (No in S805), the removable media device 10 issues a warning to the USER and requests an eject operation of the backup media (S807). The USER who confirms the warning ejects the backup media from the removable media device 10 (S808), and the eject operation is noticed to the media control program as an eject signal (S809). The media control program receiving this detects the eject operation by the eject signal S810), and through the monitoring utility (S811), performs the eject notice to the AP (S812). Here the AP receiving the eject notice can stop the backup processing on a condition that it has not ended yet (S813).

If in thus automatically running the AP an erroneous AP is run, it might fall into such an unexpected situation that data is destroyed, however, such the unexpected situation can be handled by ejecting the media at a timing of an error of a media insertion being detected

As thus described, in the present invention, firstly, the removable media device 10 detects the insertion of the removable media 11 and recognizes it as the special media for automatically activating the AP by referring to the header area A of the inserted removable media 11. Furthermore, to the host device 20 the removable media device 10 hands over data such as the AP activation flag, the AP name, the AP save location, and the AP run content set at the header area A as a response for an inquiry command periodically issued from the host device 20. Thus the automatic run (activation) of the AP is realized by the host device 20.

Thus the host device 20 can recognize the insertion of the removable media 11 only by issuing the inquiry command and can also automatically run the AP, based on the handed-over data. In addition, unlike a conventional host unit the host device 20 does without accessing a content of a specific area of the removable media 11 more than necessary. Furthermore, mouse and key operations usually performed can be omitted by specifying a minuscule operation in the AP run content set at the header area A, and accordingly, a user's intervention can be made unnecessary in running the AP.

Furthermore, the operation can becomes realized by communications performed between the media control program (firmware) prepared in the removable media device 10 and the monitoring utility prepared in the host device 20, and because the host device 20 can recognize the insertion of the removable media 11 only by issuing the inquiry command and automatically run (activate) the AP, based on the handed-over data, the burden on the OS can be drastically reduced.

In addition, the host device 20 can stop the AP in run when receiving an eject notice of the removable media 11 from the removable media device 10 while running the AP, and thus a careless overwrite and the like can be prevented.

Meanwhile, the removable media device 10 and the host device 20 are assumed to be realized: by recording a procedure in a recording medium readable by a computer, which procedure is run by each of the media insertion detection unit 101; the special media recognition unit 102; the inquiry command receipt unit 103, and the flag recognition unit 104, the header information transfer unit 105, and the AP transfer unit 106 for configuring the inquiry command response unit 100, thus shown in FIG. 2; the command issue unit 201; the inquiry command response receipt unit 200; the AP run unit 204, the format request receipt unit 205; the header information set unit 206; the timer 207; and the flag receipt unit 202 and the header information receipt unit 203 for configuring the inquiry command response receipt unit 200, thus shown in FIG. 3; by making a computer system read programs recorded in the recording medium; and by running the programs. Here the computer system means a system that includes a software such as an OS (Operating System) and a hardware such as peripheral equipment.

## Claims

1. A system comprising a host device that is connected to a removable media device through an interface (12), the host device adapted for running an application program and comprising:
an inquiry command issue unit (201) for periodically issuing an inquiry command to said removable media device;
an inquiry command response receipt unit (202) for receiving a flag which indicates whether to use a removable medium inserted in said removable media device as an application program activation medium, and for receiving a save location of the application program, as a response to said inquiry command; and
an application program run unit (204) for reading the application program from the save location on said removable medium, and running said application program according to a run content stored in a header area on said removable medium,
**characterised in that**
the application program is a backup program,
the removable media device is adapted to receive removable media corresponding to seven days of the week, the header area of each removable medium containing data on the day of the week to write a backup to the removable medium, and
the host device comprises a utility for collation of the data in the header area of an inserted medium and the actual day of the week and for issuing a warning to a user to eject the inserted medium if the data and the actual day of the week do not match.

2. A system according to claim 1, wherein, when receiving an eject notice of said removable medium from said removable media device while running said application program, said application program run unit stops said application program.

3. A system according to claim 1 or 2, the removable media device comprising:
a media insertion detection unit (101) for detecting insertion of a removable medium (11) into said removable media device;
a special media recognition unit (102) for recognising that said removable medium is a medium for activating an application program, by referring to a predetermined area (A) of the inserted removable medium when its insertion is detected;
an inquiry command response unit (100) for responding to said inquiry command periodically issued from said host device, by transferring through said interface (12) to said host device (20): (i) said flag which is set in said predetermined area and indicates whether to activate the application program and (ii) data about the save location of the application program on said removable medium.

4. A system according to claim 3, wherein the inquiry command response unit (100) is further adapted to transmit to the host device (20): (iii) an application program run content, indicating a data input of the application program, and a save area of a result of the application program.

5. A system according to any of claim 1 to 4, the host device comprising:
a format request receipt unit (205) for receiving a format request for using a removable medium as an application program activation medium; and
a header information set unit (206) for interactively producing with a user: identifier data for indicating that the removable medium is an application program activation medium, a flag indicating whether to activate the application program, a save location of the application program, and a run content for running the application program; and then for writing the identifier data, the flag, the save location, and the run content to a predetermined area of said removable medium according to said format request.

6. A program to be run on a computer used as a host device in a system of any of claims 1 to 5 and making the computer execute the steps of:
periodically issuing an inquiry command for said removable media device;
receiving a flag, which indicates whether to use a removable medium inserted in said removable media device as an application program activation medium, and receiving a save location of the application program, as a response for said inquiry command; and
reading the application program from the save location on said removable medium and running the application program according to a run content stored in a header area on said removable medium,
wherein the application program is a backup program and there are removable media corresponding to seven days of the week and each including in its header area data on a day of the week to write a backup to the removable medium, and the program makes the computer execute the following further steps:
collating the data in the header area of an inserted medium and an actual day of the week, and
issuing a warning to a user to eject the inserted medium if the data in the header area of the inserted medium and the actual day of the week do not match.

7. A program according to claim 6, making the computer execute the steps of:
receiving a format request for using a removable medium as an application program activation medium; and
interactively producing with a user: identifier data indicating that the removable medium is an application program activation medium, a flag indicating whether to activate the application program, a save location of the application program, and a run content for running the application program; and
writing the identifier data, the flag, the save location, and the run content to a predetermined area of said removable medium according to said format request.

8. A computer readable recording medium which records a program according to claim 6 or 7.

## Patentansprüche

1. System mit einem Hostgerät, das über ein Interface (12) mit einem Wechselmediengerät verbunden ist und zur Ausführung eines Anwendungsprogramms eingerichtet ist und Folgendes aufweist:
eine Abfragebefehls-Abgabeeinheit (201) zum periodischen Abgeben eines Abfragebefehls an das Wechselmediengerät,
eine Abfragebefehls-Antwortempfangseinheit (202) zum Empfang eines Flags, das angibt, ob ein in das Wechselmediengerät eingeführtes Medium als Anwendungsprogramm-Aktivierungsmedium zu verwenden ist, und zum Empfang eines Speicherorts des Anwendungsprogramms in Antwort auf den Abfragebefehl, und
eine Anwendungsprogramm-Ausführungseinheit (204) zum Lesen des Anwendungsprogramms von dem Speicherort auf dem Wechselmedium und zum Ausführen des Anwendungsprogramms entsprechend einem in einem Kopfbereich des Wechselmediums gespeicherten Ablaufinhalt,
**dadurch gekennzeichnet, dass**
das Anwendungsprogramm ein Datensicherungsprogramm ist,
das Wechselmediengerät eingerichtet ist, Wechselmedien entsprechend den sieben Tagen der Woche entgegenzunehmen, wobei der Kopfbereich des jeweiligen Wechselmediums Daten über den Wochentag für das Schreiben einer Datensicherung auf das Wechselmedium enthält, und
das Hostgerät Mittel zum Abgleich der Daten im Kopfbereich eines eingeführten Mediums und des tatsächlichen Wochentags und zur Abgabe einer Warnung an einen Benutzer, das eingeführte Medium auszuwerfen, wenn die Daten und der tatsächliche Wochentag nicht zusammenpassen, aufweist.

2. System nach Anspruch 1, wobei die Anwendungsprogramm-Ablaufeinheit das Anwendungsprogramm stoppt, wenn während des Ablaufs des Anwendungsprogramms eine Auswurfnachricht über das Wechselmedium vom Wechselmediengerät empfangen wird.

3. System nach Anspruch 1 oder 2, wobei das Wechselmediengerät Folgendes aufweist:
eine Medieneinführ-Erfassungeinheit (101) zum Erfassen des Einführens eines Wechselmediums (11) in das Wechselmediengerät,
eine Spezialmedien-Erkennungseinheit (102) zum Erkennen, dass das Wechselmedium ein Medium zum Aktivieren eines Anwendungsprogramms ist, durch Bezugnahme auf einen vorbestimmten Bereich (A) des eingeführten Wechselmediums, wenn seine Einführung erfasst wurde,
eine Abfragebefehls-Antworteinheit (100) zum Antworten auf den periodisch vom Hostgerät abgegebenen Abfragebefehl, indem über das Interface (12) (i) das genannte Flag, das in dem vorbestimmten Bereich gesetzt ist und angibt, ob das Anwendungsprogramm aktiviert werden soll, und (ii) Daten über den Speicherort des Anwendungsprogramms auf dem Wechselmedium an das Hostgerät (20) übertragen werden.

4. System nach Anspruch 3, wobei die Abfragebefehls-Antworteinheit (100) eingerichtet ist, an das Hostgerät (20) außerdem (iii) einen Anwendungsprogramm-Ablaufinhalt zu senden, der eine Dateneingabe des Anwendungsprogramms und einen Speicherbereich für ein Ergebnis des Anwendungsprogramms angibt.

5. System nach einem der Ansprüche 1 bis 4, wobei das Hostgerät Folgendes aufweist:
eine Formatierungsbefehls-Empfangseinheit (205) zum Empfang eines Formatierungsbefehls zur Verwendung eines Wechselmediums als Anwendungsprogramm-Aktivierungsmedium, und
eine Kopfinformations-Festlegungseinheit (206), um interaktiv mit einem Benutzer Kennzeichendaten zur Angabe, dass das Wechselmedium ein Anwendungsprogramm-Aktivierungsmedium ist, ein Flag, das angibt, ob das Anwendungsprogramm zu aktivieren ist, einen Speicherort des Anwendungsprogramms und einen Ablaufinhalt zum Ablauf des Anwendungsprogramms zu erzeugen und dann die Kennzeichendaten, das Flag, den Speicherort und den Ablaufinhalt entsprechend dem Formatierungsbefehl in einen vorbestimmten Bereich des Wechselmediums zu schreiben.

6. Programm zum Ablauf auf einem als Hostgerät in einem System nach einem der Ansprüche 1 bis 5 verwendeten Computer, das den Computer folgende Schritte ausführen lässt:
periodisches Abgeben eines Abfragebefehls für das Wechselmediengerät,
Empfangen eines Flags, das angibt, ob ein in das Wechselmediengerät eingeführtes Wechselmedium als Anwendungsprogramm-Aktivierungsmedium verwendet werden soll, und Empfangen eines Speicherorts des Anwendungsprogramms als Antwort auf den Abfragebefehl, und
Lesen des Anwendungsprogramms vom Speicherort auf dem Wechselmedium und Ausführen des Anwendungsprogramms entsprechend einem in einem Kopfbereich des Wechselmediums gespeicherten Ablaufinhalt,
wobei das Anwendungsprogramm ein Datensicherungsprogramm ist und Wechselmedien entsprechend den sieben Tagen der Woche vorhanden sind und jeweils in ihrem Kopfbereich Daten über einen der Wochentage zum Schreiben einer Datensicherung auf das Wechselmedium enthalten und wobei das Programm den Computer zur Ausführung der folgenden weiteren Schritte veranlasst:
Abgleichen der Daten im Kopfbereich eines eingeführten Mediums und des tatsächlichen Wochentags, und
Abgeben einer Warnung an einen Benutzer, das eingeführte Medium auszuwerfen, wenn die Daten im Kopfbereich des eingeführten Mediums und der tatsächliche Wochentag nicht zusammenpassen.

7. Programm nach Anspruch 6, das den Computer zur Ausführung folgender Schritte veranlasst:
Empfangen eines Formatierungsbefehls zur Verwendung eines Wechselmediums als Anwendungsprogramm-Aktivierungsmedium, und
interaktives Erzeugen von Kennzeichnungsdaten, die angeben, dass das Wechselmedium ein Anwendungsprogramm-Aktivierungsmedium ist, eines Flags, das angibt, ob das Anwendungsprogramm aktiviert werden soll, eines Speicherorts des Anwendungsprogramms und eines Ablaufinhalts für den Ablauf des Anwendungsprogramms zusammen mit dem Benutzer, und
Schreiben der Kennzeichnungsdaten, des Flags, des Speicherorts und des Ablaufinhalts in einen vorbestimmten Bereich des Wechselmediums entsprechend dem Formatierungsbefehl.

8. Computerlesbares Aufzeichnungsmedium mit einem Programm nach Anspruch 6 oder 7.

## Revendications

1. Système comportant un dispositif hôte qui est relié à un dispositif de support amovible par l'intermédiaire d'une interface (12), le dispositif hôte étant adapté pour exécuter un programme d'application et comportant :
une unité d'émission de commande de requête (201) pour émettre périodiquement une commande de requête audit dispositif de support amovible ;
une unité de réception de réponse de commande de requête (202) pour recevoir un drapeau qui indique d'utiliser un support amovible inséré dans ledit dispositif de support amovible en tant que support d'activation de programme d'application, et pour recevoir un emplacement de sauvegarde du programme d'application, en tant que réponse à ladite commande de requête ; et
une unité d'exécution de programme d'application (204) pour lire le programme d'application à partir de l'emplacement de sauvegarde sur ledit support amovible, et exécuter ledit programme d'application conformément à un contenu d'exécution mémorisé dans une zone d'en-tête sur ledit support amovible,
**caractérisé en ce que**
le programme d'application est un programme de restauration,
le dispositif de support amovible est adapté pour recevoir des supports amovibles correspondant aux sept jours de la semaine, la zone d'en-tête de chaque support amovible contenant des données concernant le jour de la semaine pour écrire une restauration sur le support amovible, et
le dispositif hôte comporte un utilitaire pour la compilation des données dans la zone d'en-tête d'un support inséré et le jour effectif de la semaine et pour émettre un avertissement à l'utilisateur afin d'éjecter le support inséré si les données et le jour effectif de la semaine ne correspondent pas.

2. Système selon la revendication 1, dans lequel, lors de la réception d'une indication d'éjection dudit support amovible provenant dudit dispositif de support amovible lors de l'exécution dudit programme d'application, ladite unité d'exécution de programme d'application stoppe ledit programme d'application.

3. Système selon la revendication 1 ou 2, le dispositif de supports comportant :
une unité de détection d'insertion de supports (101) pour détecter l'insertion d'un support amovible (11) dans ledit dispositif de support amovible ;
une unité de reconnaissance de support spécial (102) pour reconnaître que ledit support amovible est un support pour activer un programme d'application, en référence à une zone prédéterminée (A) du support amovible inséré lorsque son insertion est détectée ;
une unité de réponse de commande de requête (100) pour répondre à ladite commande de requête périodiquement émise provenant dudit dispositif hôte, en transférant par l'intermédiaire de ladite interface (12) audit dispositif hôte (20) : (i) ledit drapeau qui est fixé dans ladite zone prédéterminée et indique d'activer le programme d'application et (ii) les données concernant l'emplacement de sauvegarde du programme d'application sur ledit support amovible.

4. Système selon la revendication 3, dans lequel l'unité de réponse de commande de requête (100) est en outre adaptée pour transmettre au dispositif hôte (20) : (iii) un contenu d'exécution de programme d'application, indiquant une entrée de données du programme d'application, et une zone de sauvegarde d'un résultat du programme d'application.

5. Système selon l'une quelconque des revendications 1 à 4, le dispositif hôte comportant :
une unité de réception de requête de format (205) pour recevoir une requête de format pour utiliser un support amovible en tant que support d'activation de programme d'application ; et
une unité d'ensemble d'informations d'en-tête (206) pour produire de façon interactive avec un utilisateur: des données d'identifiant pour indiquer que le support amovible est un support d'activation de programme d'application, un drapeau indiquant d'activer le programme d'application, un emplacement de sauvegarde du programme d'application, et un contenu d'exécution pour exécuter le programme d'application ; et ensuite pour écrire les données d'identifiant, le drapeau, l'emplacement de sauvegarde, et le contenu d'exécution dans une zone prédéterminée dudit support amovible conformément à ladite requête de format.

6. Programme à exécuter sur un ordinateur utilisé en tant que dispositif hôte dans un système selon l'une quelconque des revendications 1 à 5 et amenant l'ordinateur à exécuter les étapes consistant à :
émettre périodiquement une commande de requête pour ledit dispositif de support amovible ;
recevoir un drapeau, qui indique d'utiliser un support amovible inséré dans ledit dispositif de support amovible en tant que support d'activation de programme d'application, et recevoir un emplacement de sauvegarde du programme d'application, en réponse à ladite commande de requête ; et
lire le programme d'application à partir de l'emplacement de sauvegarde sur ledit support amovible et exécuter le programme d'application conformément à un contenu d'exécution mémorisé dans une zone d'en-tête sur ledit support amovible,
dans lequel le programme d'application est un programme de restauration et il existe des supports amovibles correspondant aux sept jours de la semaine et chacun comprenant dans sa zone d'en-tête des données concernant un jour de la semaine pour écrire une restauration dans le support amovible, et le programme amène l'ordinateur à exécuter les autres étapes suivantes :
compiler les données dans la zone d'en-tête d'un support inséré et un jour effectif de la semaine, et
émettre un avertissement à l'utilisateur pour éjecter le support inséré si les données dans la zone d'entête du support inséré et le jour effectif de la semaine ne correspondent pas.

7. Programme selon la revendication 6, amenant l'ordinateur à exécuter les étapes consistant à :
recevoir une requête de format pour utiliser un support amovible en tant que support d'activation de programme d'application ; et
produire de façon interactive avec un utilisateur: des données d'identifiant indiquant que le support amovible est un support d'activation de programme d'application, un drapeau indiquant d'activer le programme d'application, un emplacement de sauvegarde du programme d'application, et un contenu d'exécution pour exécuter le programme d'application ; et
écrire les données d'identifiant, le drapeau, l'emplacement de sauvegarde, et le contenu d'exécution dans une zone prédéterminée dudit support amovible conformément à ladite requête de format.

8. Support d'enregistrement pouvant être lu par un ordinateur qui enregistre un programme selon la revendication 6 ou 7.
